# EUROPÄISCHE PATENTSCHRIFT

(11) **EP 2 838 314 B1**
(45) Veröffentlichungstag und Bekanntmachung des Hinweises auf die Patenterteilung: **09.11.2022**
(21) Anmeldenummer: 14002685.7
(22) Anmeldetag: 01.08.2014
(51) Int. Cl.: H05B 1/02, B29C 65/14, B29C 65/16, H05B 3/00

(54) **Wärmestrahler, Vorrichtung zum Infrarotschweißen und Verfahren zum Erwärmen von Kunststoffbauteilen**
Heat radiator, device for infra-red welding and method for heating of plastic components
Rayonnement de chaleur, dispositif de soudage infrarouge et procédé de chauffage de composants en plastique

(30) Priorität: 13.08.2013 DE 102013216021
(43) Veröffentlichungstag der Anmeldung: 18.02.2015
(73) Patentinhaber: BRANSON Ultraschall Niederlassung der Emerson Technologies GmbH & Co. OHG, 63128 Dietzenbach (DE)
(72) Erfinder: Priem, Heiko, 63636 Brachttal (DE); Köhler, Thomas, 63322 Rödermark (DE)
(74) Vertreter: Heyer, Volker

(56) Entgegenhaltungen:
- WO-A1-03/047311
- DE-A1- 4 242 812
- DE-A1- 4 416 518
- DE-A1- 10 044 574

## Beschreibung

### Gebiet der Erfindung

Die vorliegende Erfindung betrifft eine Vorrichtung zum Infrarotschweißen von mindestens zwei Kunststoffbauteilen sowie ein Verfahren zum Verschweißen von mindestens zwei Kunststoffbauteilen.

### Hintergrund der Erfindung

In den letzten Jahren hat das Schweißen von Kunststoffen mittels Infrarotstrahlung große Verbreitung gefunden. Hierbei werden die zu verschweißenden Kunststoffteile im Bereich der Schweißnaht mittels Infrarotstrahlung erwärmt und danach gefügt. Der Vorteil dieser Technologie gegenüber Reibschweißverfahren, wie z. B. dem Vibrations- oder Rotationsschweißen, besteht u. a. in der Vermeidung der in der Trockenreibphase entstehenden Staub- und Faserpartikel. Diese Partikel verschmutzen und beeinträchtigen die herzustellende Schweißverbindung. Zudem stellen sie eine Belastung der Arbeitsumgebung dar.

Neben dem Infrarotschweißen von Kunststoffen werden derartige Infrarotstrahler auch zur Vorwärmung oder Vorplastifizierung von Kunststoffbauteilen in Kombination mit dem Vibrationsschweißen eingesetzt. Der Verfahrensablauf des Infrarotschweißens ähnelt dem Heizelementschweißen von Kunststoffen. Im Unterschied zum Heizelementschweißen werden die Schweißzonen beider Kunststoff-Fügepartner berührungslos durch die Absorption der Wärmestrahlungsenergie erwärmt. Auf diese Weise wird ein Materialrückstand durch Anhaften der Schmelze des Kunststoffbauteils am Heizelement vermieden. Da die Fügeflächen der miteinander zu verbindenden Kunststoffbauteile meist uneben ausgebildet sind und zudem gewissen Toleranzen unterliegen, ist der Abstand von bestimmten Abschnitten der Kunststoffbauteile zum Wärmestrahler ungleichmäßig. Dies hat eine inhomogene Erwärmung der Fügezone, d. h. der zu erwärmenden Bereiche der Kunststoffbauteile, zur Folge.

Nach Erreichen einer gewünschten Schmelzeschichtdicke am Kunststoffbauteil wird die Erwärmphase der Infrarotstrahler durch die Fügephase abgelöst. Dabei wird das Strahlerelement aus der Fügeebene bzw. aus der Umgebung der Kunststoffbauteile wegbewegt. Die Fügephase der Kunststoffbauteile beginnt mit der gegenseitigen Berührung der Fügeflächen. Während die Fügeflächen gegeneinander gepresst werden, erfolgt eine Abkühlung und somit Aushärtung und Verbindung der Kunststoffbauteile. Sobald diese Verbindung hergestellt ist, ist das Infrarotschweißen abgeschlossen.

Beim Infrarotschweißen kommen je nach Anwendung unterschiedliche Strahlerarten zum Einsatz. Zu diesen Strahlerarten zählen bspw. kurzwellige Strahler mit Wellenlänge von 1,6 µm, wie etwa Halogenstrahler. Des Weiteren werden mittelwellige Strahler mit Wellenlängen zwischen 1,6 µm und 3,5 µm genutzt, wie bspw. Metallfolienstrahler. Eine weitere Alternative stellen langwellige Strahler dar, die einen Wellenlängenbereich oberhalb 3,5 µm abdecken, wie bspw. Quarzstrahler. In diesem Zusammenhang sollte erwähnt werden, dass ein thermischer Strahler die Wärmestrahlung nicht bei genau einer Wellenlänge imitiert, sondern vielmehr in einem Wellenlängenspektrum. Auch die Absorptionseigenschaften der Kunststoffe und damit die Erwärmung der Fügezone können sehr unterschiedlich ausfallen. Ein wesentlicher Vorteil des Infrarotschweißens besteht somit in dem fehlenden Kontakt zwischen der Heizquelle und dem Kunststoff, wodurch eine Verschmutzung der Heizquelle durch Kunststoffablagerungen vermieden wird. Ein weiterer Vorteil besteht in der Anwendung der Infrarotstrahler oder generell der Wärmestrahler als Vorwärmquelle in anderen kunststoffverarbeitenden Verfahren. So wird bspw. beim Vibrationsschweißen der Kunststoff mittels Infrarotstrahlung im Schweißnahtbereich vorgewärmt, um auf diese Weise die Geschwindigkeit beim Vibrationsschweißen zu erhöhen. Um komplexe, d. h. dreidimensionale und lange, Schweißnahtgeometrien mittels Infrarotstrahler zu erwärmen, bzw. zu Verschweißen, sind häufig mehrere Strahler erforderlich. Auch ist es technisch von Vorteil, die Länge der Strahler zu begrenzen. Je kürzer die Wärmestrahler sind, umso geringer ist der technische Aufwand, um diese im Schadensfall auszutauschen. In erster Linie ist aber von Vorteil, dass viele kleine Strahlerelemente eine homogenere Erwärmung der Kunststoffbauteile ermöglichen. Denn jedes dieser Strahlerelemente ist für sich unabhängig von den anderen Strahlerelementen optimal an den entsprechenden zu erwärmenden Bereich des Kunststoffbauteils anpassbar. Bei großen Kunststoffbauteilen werden bspw. 20 oder mehr Wärmestrahlerelemente benötigt.

Ein Verfahren und eine Vorrichtung für das Erwärmen von Kunststoff unter Verwendung von Infrarot-Strahlung sind in WO 03/047311 A1 beschrieben. Die Infrarot-Strahlung wird durch einen Wechselstrom erzeugt, der wiederum durch das Transformieren eines Gleichstroms erhalten wurde.

Eine Vorrichtung zum stirnseitigen Verschweißen von Kunststoffprofilen ist weiterhin in DE 44 165 18 A1 beschrieben. Spannvorrichtungen dienen zur koaxialen Positionierung und zur Ausführung einer axialen Relativbewegung der zu verschweißenden Profile. Eine zwischen die zu verschweißenden Profile bringbare Heizvorrichtung dient dazu, die Stirnflächen der zu verschweißenden Profile auf die erforderliche Schweißtemperatur zu bringen. Die Heizvorrichtung besitzt hierzu wenigstens ein flächiges Widerstandsheizelement zur direkten Beaufschlagung der Stirnflächen der Profile mit Infrarot-Strahlung. Beabstandet von den Stirnflächen der Profile angeordnete Schutzplatten aus Infrarot-durchlässigem Glaskeramikmaterial sind als separate Platten jeweils zwischen dem Widerstandsheizelement und den Stirnflächen der zu verschweißenden Profile angeordnet. Aufgrund der direkten Aufheizung der Stirnflächen der zu verschweißenden Profile durch das Widerstandsheizelement ist eine sehr schnelle, energiesparende Aufheizung auf die erforderliche Schweißtemperatur möglich, wobei die als Berührungsschutz dienenden Schutzplatten aus Infrarot-durchlässigem Glaskeramikmaterial den Wärmedurchgang nur vernachlässigbar beeinflussen.

Bei der Verwendung von Metallfolienstrahlern ist von Nachteil, dass die Metallfolie eines Metallfolienstrahlers frei zugänglich ist und daher als spannungsführendes Element gewissen Sicherheitsanforderungen unterliegt. Um diese zu erfüllen, sind aufwändige Schutzmaßnahmen nötig, sodass der Werker nicht die Metallfolie berühren kann. Vorteilhafterweise sind Metallfolienstrahler mit geringem Aufwand an die Oberflächenkontur eines Kunststoffbauteils anpassbar.

Es ist daher die Aufgabe vorliegender Erfindung eine Vorrichtung zum Infrarotschweißen sowie ein Verfahren zum Erwärmen oder Verschweißen von Kunststoffbauteilen bereitzustellen, die im Vergleich zu bekannten Konstruktionen und Verfahren flexibel und wirtschaftlich realisierbar sind.

### Zusammenfassung der Erfindung

Die oben genannten Aufgabe wird durch eine Vorrichtung zum Infrarotschweißen von mindestens zwei Kunststoffbauteilen gemäß dem unabhängigen Patentanspruch 1 sowie durch ein Verfahren zum Verschweißen von mindestens einem Kunststoffbauteil gemäß dem unabhängigen Patentanspruch 5 gelöst. Vorteilhafte Ausgestaltungen und Weiterentwicklungen vorliegender Erfindung gehen aus den abhängigen Ansprüchen sowie der Beschreibung in Kombination mit den entsprechenden Zeichnungen hervor.

Ein beispielhafter Wärmestrahler, insbesondere ein Infrarotstrahler, weist die folgenden Merkmale auf: mindestens eine Strahlquelle, mit der zugeführte elektrische Energie in Wärmestrahlung umwandelbar ist, und eine Steuerung umfassend mindestens einen Frequenzumrichter mit einem ersten, einem zweiten und einem dritten Ausgang, sodass zwischen dem ersten und dritten Ausgang ein erster Wechselstrom sowie zwischen dem zweiten und dritten Ausgang ein zweiter Wechselstrom bereitstellbar ist, mit denen die mindestens eine Strahlquelle oder eine Mehrzahl von Strahlquellen betreibbar ist.

Wärmestrahler werden einerseits zum Erwärmen von Kunststoffbauteilen zur Vorbereitung bspw. des Vibrationsschweißens eingesetzt. Ein weiteres Anwendungsgebiet stellt das Infrarotschweißen von Kunststoffbauteilen dar. Hier dienen die Wärmestrahler der berührungslosen Erwärmung der Kunststoffbauteile, die nachfolgend miteinander verbunden werden.

Derartige Wärmestrahler und gemäß einer bevorzugten Ausführungsform Infrarotstrahler oder Metallfolienstrahler stellen in der elektrischen Betrachtung ohmsche Verbraucher dar. Schließt man diese Wärmestrahler an eine elektrische Spannung an, fließt ein elektrischer Strom durch den Wärmestrahler, der im Wärmestrahler in Wärmestrahlung umgewandelt wird. Gerade Metallfolienstrahler sind geeignet zum Erwärmen und Verschweißen von Kunststoffbauteilen, da sie sich allein oder in Kombination mit mehreren Metallfolienstrahler optimal an eine Bauteilgeometrie anpassen lassen. Da jedoch die stromdurchflossene Metallfolie des Metallfolienstrahlers frei zugänglich ist, stellt die an der Metallfolie anliegende elektrische Spannung ein gesundheitliches Risiko für den Werker bei Berührung des Wärmestrahlers dar.

Um dieses Risiko zu minimieren, wird der Wärmestrahler erfindungsgemäß mithilfe mindestens eines Frequenzumrichters angesteuert. Bekannte Frequenzumrichter werden zur Ansteuerung von Drehstrommotoren verwendet, wobei der Frequenzumrichter an ein Drehstromnetz mit einer Drei-Phasen-Wechselspannung angeschlossen ist. Zu diesem Zweck werden zumeist spannungsgeführte Frequenzumrichter eingesetzt, die mit ihren drei Ausgängen U, V, W die entsprechenden drei Eingänge eines Drehstrommotors versorgen. Im Unterschied zu diesen bekannten Frequenzumrichtern liefert der erfindungsgemäß genutzte Frequenzumrichter einen ersten und einen zweiten Wechselstrom, die zum Betrieb und zur Ansteuerung von mindestens einem oder einer Mehrzahl von Wärmestrahlern genutzt werden. Der erste Wechselstrom ist zwischen dem ersten und dritten Ausgang des Frequenzumrichters und der zweite Wechselstrom ist zwischen dem zweiten und dem dritten Ausgang des Frequenzumrichters abgreifbar. Diese unterschiedlichen ersten und zweiten Wechselströme, die vom Betrag her aber auch gleich sein können, sind nutzbar, um einen oder mehrere Wärmestrahler, im Speziellen Metallfolienstrahler, anzusteuern. Die ersten und zweiten Wechselströme werden durch den Frequenzumrichter in Kombination mit einer entsprechenden ersten und zweiten Wechselspannung bereitgestellt. Um den Betrieb der Metallfolienstrahler positiv zu beeinflussen, werden erfindungsgemäß der erste und dritte Ausgang des Frequenzumrichters oder der zweite und dritte Ausgang des Frequenzumrichters jeweils mit einem Transformator verbunden, um die durch den Frequenzumrichter jeweils bereitgestellte elektrische Wechselspannung in einen vorbestimmten Betriebsbereich zu transformieren. Dieser Betriebsbereich liegt vorzugsweise oberhalb oder unterhalb der elektrischen Ausgangsspannung des Frequenzumrichters. Vorzugsweise dient mindestens einer der Transformatoren dazu, die elektrische Wechselspannung des Frequenzumrichters in einen Niederspannungsbereich zu transformieren, der als berührungssicher angesehen wird. Dies bedeutet im Speziellen, dass bspw. ein Werker einen Metallfolienstrahler berühren darf, der an eine derart berührungssichere elektrische Spannung angeschlossen ist. Denn diese berührungssichere elektrische Spannung, die bspw. in einem Bereich unterhalb von 40 V oder unterhalb von 25 V liegt, führt nicht zu gesundheitlichen Schädigungen des damit in Kontakt kommenden Werkers. In diesem Zusammenhang ist hervorzuheben, dass neben den mit den mit Drei-Phasen-Wechselspannung betriebenen Frequenzumrichtem erfindungsgemäß bevorzugt auch mit einer Ein-Phasen-Wechselspannung betriebene Frequenzumrichter genutzt werden. Während des Betriebs des mit Ein-Phasen-Wechselspannung betriebenen Frequenzumrichters sorgt der entsprechend programmierte Steuerkreis des Frequenzumrichters (siehe unten) dafür, dass am Ausgang des Frequenzumrichters zwei Stromausgänge mit entsprechenden Wechselspannungen bereitgestellt werden. Daraus folgt, dass im Vergleich zu mit Drei-Phasen-Wechselspannung betriebenen Frequenzumrichtern die elektrische Versorgung des mit Ein-Phasen-Wechselspannung betriebenen Frequenzumrichters zwar anders ist, am Ausgang des mit Ein-Phasen-Wechselspannung betriebenen Frequenzumrichters aber die gleichen technischen Merkmale bzw. Voraussetzungen, wie elektrische Wechselströme und elektrische Wechselspannungen, vorliegen wie an dem mit Drei-Phasen-Wechselspannung betriebenen Frequenzumrichter.

Basierend auf der oben beschriebenen Ansteuerung eines Wärmestrahlers mithilfe eines speziell daran angepassten Frequenzumrichters umfasst die vorliegende Erfindung eine Vorrichtung zum Infrarotschweißen von mindestens zwei Kunststoffbauteilen. Diese Vorrichtung zum Infrarotschweißen weist die folgenden Merkmale auf: mindestens eine Strahlquelle, mit der zugeführte elektrische Energie in Wärmestrahlung umwandelbar ist, insbesondere einen Metallfolienstrahler, und mit der Kunststoffbauteile erwärmbar sind, eine Steuerung umfassend mindestens einen Frequenzumrichter, mit einem ersten, einem zweiten und einem dritten Ausgang, sodass zwischen dem ersten und dritten Ausgang ein erster Wechselstrom sowie zwischen dem zweiten und dritten Ausgang ein zweiter Wechselstrom zur Versorgung der mindestens einen Strahlquelle generierbar ist, und eine Anordnung zum Halten und Bewegen der Kunststoffbauteile, sodass diese nach dem Erwärmen durch die mindestens eine Strahlquelle in Anlage bringbar und miteinander verschweißbar oder zu einer weiteren Verarbeitungsstelle bringbar sind.

Die erfindungsgemäße Vorrichtung zum Infrarotschweißen von mindestens zwei Kunststoffbauteilen basiert auf den gleichen Komponenten wie der oben beschriebene Wärmestrahler. Daher gelten die obigen technischen Charakterisierungen des Wärmestrahlers und des damit in Verbindung genutzten Frequenzumrichters in gleicher Weise auch für die hier genannte Vorrichtung zum Infrarotschweißen.

Wie bereits oben dargelegt worden ist, ist mithilfe einer Mehrzahl von Wärmestrahlern oder Metallfolienstrahlern eine optimale Anpassung der Strahlergeometrie an die Bauteilgeometrie realisierbar. Die Verwendung vieler kleiner Wärmestrahler hat zudem den Vorteil, dass diese mit einer geringeren elektrischen Spannung betrieben werden können als bspw. langgestreckte Strahlersegmente. Somit wird durch die Segmentierung des Wärmestrahlers bzw. durch die Nutzung einer Vielzahl kleinerer Wärmestrahler, wie bspw. Metallfolienstrahler, die erforderliche elektrische Versorgungsspannung auf vorzugsweise 25 V Wechselspannung oder darunter gesenkt. Damit befindet man sich im Bereich der elektrischen Kleinspannungen, sodass Maschinen und Schweißwerkzeuge sicherungstechnisch mit geringeren Auflagen und somit einfacher realisiert werden können. Denn eine versehentliche Berührung eines offen liegenden Metallfolienstrahlers durch einen Werker führt nicht zu einem gesundheitsgefährdenden elektrischen Spannungsstoß.

Um jeden Wärmestrahler bzw. jedes Wärmestrahlersegment unabhängig ansteuern zu können, wurde bisher jedes Segment mit einer eigenen Strom- und Spannungsversorgung angesteuert. Dies hat einen erheblichen Aufwand aufgrund der hohen Anzahl an Stromnetzteilen zur Folge. Zudem erfordert jedes Stromnetzteil eine eigene Regelung, was wirtschaftlich kaum vertretbare Kosten zur Folge hat. Daher ist es erfindungsgemäß bevorzugt, dass der erste und/oder der zweite Transformator eine Primärwicklung und eine oder eine Mehrzahl von Sekundärwicklungen aufweist, um eine oder eine Mehrzahl von Strahlquellen elektrisch versorgen zu können. Zu diesem Zweck sind die Sekundärwicklungen in ihrer Anzahl auf die Anzahl der elektrisch zu versorgenden Wärmestrahler abgestimmt. Des Weiteren ist das Wicklungsverhältnis von Primärwicklung zu Sekundärwicklung derart dimensioniert, dass der optimale elektrische Betriebsbereich für den anzusteuernden Wärmestrahler, bspw. den Metallfolienstrahler, erzielbar ist. So ist vorzugsweise über die geeignete Dimensionierung der Sekundärwicklung eine elektrische Kleinspannung erzeugbar, mit der berührungssicher ein Metallfolienstrahler betrieben werden kann. In gleicher Weise ist es bevorzugt, die Sekundärwicklung bzw. die Sekundärwicklungen an eine elektrische Versorgung von einer Mehrzahl von Metallfolienstrahlern anzupassen. Denn je nach elektrischer Zusammenschaltung von mehrerer Metallfolienstrahlern, die jeweils als ohmscher Verbraucher in einem elektrischen Stromkreis wirken, sind bekannte Berechnungsvorschriften anwendbar, die einen gewünschten elektrischen Betriebs- bzw. Versorgungsbereich der einzelnen Metallfolienstrahler garantieren.

Entsprechend dieser allgemeinen Zusammenfassung vorliegender Erfindung fungiert der Frequenzumrichter als Stromnetzteil, das zwei voneinander unabhängige und im Wert verschiedene oder gleiche Stromstärken liefern kann. In Kombination mit den oben genannten Transformatoren sind zudem berührungssichere elektrische Betriebsspannungen für die mindestens eine Strahlquelle generierbar.

Gemäß einer bevorzugten Ausführungsform vorliegender Erfindung ist eine beliebige Bauart eines Wärmestrahlers in Kombination mit der oben beschriebenen Schaltung einsetzbar. Erfindungsgemäß bevorzugt wird als Wärmestrahler aber ein Metallfolienstrahler oder eine Mehrzahl von Metallfolienstrahlern eingesetzt.

Gemäß einer weiteren bevorzugten Ausführungsform vorliegender Erfindung wird eine Mehrzahl von Frequenzumrichtern zur elektrischen Versorgung der Wärmestrahler eingesetzt. Diese Mehrzahl an Frequenzumrichtern ist über ein in BUS-System miteinander verbunden und ansteuerbar. Ein derartiges BUS-System stellt sicher, dass die einzelnen Frequenzumrichter in effektiver Weise einzelnen ansteuerbar sind. Zudem ist der Schaltungsaufwand zur Realisierung einer derartig individuellen Ansteuerung der Frequenzumrichter aufgrund dieses BUS-Systems begrenzt. Aufgrund der individuellen Ansteuerung der einzelnen Metallfolienstrahler mithilfe des BUS-Systems sind zudem unterschiedliche Abstände zwischen Kunststoffbauteil und Wärmestrahler nicht nur durch eine erhöhte Anzahl von Wärmestrahlern ausgleichbar, sondern ebenfalls durch eine individuell unterschiedliche Ansteuerung der einzelnen Wärmestrahler in unterschiedlichen Bauteilsegmenten.

Vorliegende Erfindung offenbart zudem ein Verfahren zum Verschweißen von mindestens zwei Kunststoffbauteilen. Dieses Verfahren weist die folgenden Schritte auf: Bereitstellen (S1) mindestens einer Strahlquelle, vorzugsweise mindestens eines Infrarotwärmestrahlers oder eines Metallfolienstrahlers, elektrisches Versorgen (S2) der mindestens einen Strahlquelle mit mindestens einem Frequenzumrichter, der einen ersten und einen zweiten Wechselstrom erzeugt, und Erwärmen (S4) des mindestens einen Kunststoffbauteils durch einen definierten Wechselstrom in der mindestens einen Strahlquelle.

Entsprechend den obigen Beschreibungen werden die Metallfolienstrahler durch eine individuell anpassbare elektrische Spannung und einen entsprechenden Wechselstrom versorgt. Diese elektrischen Wechselströme stellt mindestens ein Frequenzumrichter bereit, der als ein elektrisches Stromnetzteil mit zwei unterschiedlichen oder gleichen bereitstellbaren Strömen arbeitet. Mithilfe von erfindungsgemäß dem Frequenzumrichter nachgeschalteten Transformatoren (S3) wird eine berührungssichere Wechselspannung für die elektrische Versorgung der mindestens einen Strahlquelle erzeugt.

Um zwei Kunststoffbauteile gezielt zu erwärmen und nachfolgend miteinander zu verschweißen, werden vorzugsweise die Wärmestrahler über ein BUS-System angesteuert (S5). Nach ausreichender Plastifizierung der Kunststoffbauteile in der Fügezone, werden die mindestens zwei erwärmten Kunststoffbauteile in Anlage zueinander bewegt, sodass die Kunststoffbauteile miteinander verschweißt werden (S6).

### Kurze Beschreibung der begleitenden Zeichnung

Die vorliegende Erfindung wird unter Bezugnahme auf die begleitende Zeichnung näher erläutert. Es zeigen:
- Figur 1: ein erstes nicht erfindungsgemäßes Beispiel, mit dem vier Wärmestrahler angesteuert werden,
- Figur 2: ein weiteres nicht erfindungsgemäßes Beispiel, bei dem zwei Wärmestrahler angesteuert werden,
- Figur 3: eine bevorzugte Ausführungsform vorliegender Erfindung, bei der eine Mehrzahl von Wärmestrahlern angesteuert wird und

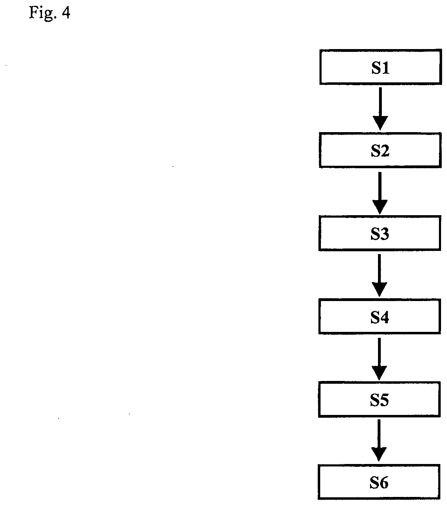

- Figur 4: ein Flussdiagramm einer bevorzugten Ausführungsform des erfindungsgemäßen Verfahrens zum Erwärmen oder Verschweißen von mindestens einem Kunststoffbauteil.

### Detaillierte Beschreibung der bevorzugten Ausführungsformen

Vorliegende Beschreibung betrifft mindestens einen mithilfe eines Frequenzumrichters elektrisch betriebenen Wärmestrahler. Wie oben bereits erläutert worden ist, sind verschiedene Konstruktionen von Wärmestrahlern bekannt, die zugeführte elektrische Energie in eine Wärmestrahlung umwandeln. Mit dieser Wärmestrahlung werden Kunststoffe und andere Materialien erwärmt oder vorgewärmt und dadurch zur weiteren Verarbeitung vorbereitet. Zudem werden Kunststoffe mithilfe von derartigen Wärmestrahlern, insbesondere Infrarotwärmestrahler, miteinander verschweißt. Derartige Verfahren sind bekannt als Infrarotschweißen von Kunststoffen. Im Weiteren wird die Verwendung, die Ansteuerung, der Betrieb von Wärmestrahlern anhand von Metallfolienstrahlern erläutert. Somit gelten alle Erläuterungen auch für andere Wärmestrahler.

Der bevorzugte Metallfolienstrahler ist im Stand der Technik bekannt. Eine entsprechende Konstruktion ist in DE 42 42 812 A1 beschrieben, auf die im Hinblick auf Aufbau und Funktionsweise des Infrarotstrahlers Bezug genommen wird. Er besteht aus einer Metallfolie, an die eine elektrische Spannung, vorzugsweise eine elektrische Wechselspannung, angeschlossen wird. Der daraufhin in der Metallfolie, die als ohmscher Widerstand im Stromkreis wirkt, entstehende Stromfluss wird in Wärme umgewandelt, die die Metallfolie abstrahlt. Die Metallfolienstrahler sind fast in jeder beliebigen Größe und Form herstellbar, wodurch nahezu jede beliebige Oberflächenkontur mit einer Mehrzahl von Metallfolienstrahlern mit Wärme, vorzugsweise gleichmäßig, bestrahlbar ist. Basierend auf dieser Wärmezufuhr sind Kunststoffe vorwärmbar oder infrarotverschweißbar. Das Vorwärmen mittels Infrarotstrahler in Kombination mit dem Kunststoffschweißen ist in DE 197 52 648 C2 erläutert. DE 101 22 802 A1 beschreibt eine Strahlerkonstruktion und ein Verfahren zum Vorwärmen von Kunststoffbauteilen in Kombination mit dem bekannten Vibrations- oder Reib schweißen. DE 601 10 536 T2 ist ebenfalls die Beschreibung eines Infrarotstrahlers sowie dessen Einsatz beim Infrarot- bzw. Kunststoffschweißen entnehmbar. Auf die oben genannten Dokumente wird bezüglich der Konstruktion von Infrarotstrahlern sowie der Gestaltung, des Ablaufs von Vorwärm- und Kunststoffschweißverfahren und deren Kombination Bezug genommen.

Um die Mehrzahl der zum Erwärmen oder Infrarotschweißen erforderlichen Metallfolienstrahler anzustrahlen, wird erfindungsgemäß ein Frequenzumrichter in Kombination mit einem Transformator genutzt. Gemäß einem nicht erfindungsgemäßen Beispiel kann der Frequenzumrichter direkt ohne zwischengeschalteten Transformator genutzt werden. Je nach Anzahl der anzusteuernden Metallfolienstrahler werden mehrere Frequenzumrichter verwendet, die jeweils mit einer bekannten Drei-Phasen-Wechselspannung oder mit einer Ein-Phasen-Wechselspannung versorgt werden.

Bekannte Frequenzumrichter werden generell für die Steuerung von Drehstromasynchronmotoren verwendet. Dabei wird die Frequenz der den Drehstromasynchronmotor speisenden Wechselspannung variiert, um die Drehzahl des Drehstrommotors zu verändern. Dieses Prinzip nennt man auch spannungsgeführten Frequenzumrichter, das sich seit den 90iger Jahren in breiter Anwendung durchgesetzt hat.

Derartige Frequenzumrichter und auch einphasig betriebene Frequenzumrichter umfassen einen Gleichrichter, der aus einer Wechselspannung, bspw. die versorgende drei Phasen Wechselspannung, eine Gleichspannung erzeugt. Diese Gleichspannung wird in einem nachgeschalteten Zwischenkreis stabilisiert und geglättet. Dann wird in einem Wechselrichter in Abhängigkeit von der geforderten Motordrehzahl das benötigte Spannungs-Frequenz-Verhältnis in Form einer Wechselspannung erzeugt. Die drei Komponenten Gleichrichter,

Zwischenkreis und Wechselrichter werden einzeln und/oder gemeinsam durch einen übergeordneten Steuerkreis angesteuert. In bekannten Frequenzumrichtern gibt der Steuerkreis die notwendige Information zur Erzeugung der Drehzahl im Motor und daher zur Erzeugung des entsprechenden Spannungs-Frequenz-Verhältnisses im Frequenzumrichter vor.

Zur Ansteuerung der bevorzugten Mehrzahl von Metallfolienstrahlern wird ein Frequenzumrichter mit abgewandelter Funktionalität im Vergleich zu bekannten dreiphasigen und einphasigen Frequenzumrichtern (siehe oben) eingesetzt. Denn ein Metallfolienstrahler stellt eine ohmsche Last im Stromkreis dar, der nicht mit einem individuell angepassten Frequenz-Spannungs-Verhältnis angesteuert werden muss. Der Frequenzumrichter hat daher nicht die Aufgabe, eine Frequenz zu variieren oder eine variable Frequenz zur Verfügung zu stellen. Stattdessen arbeitet der Frequenzumrichter als eine duale Stromquelle oder Stromregelung, an deren Ausgang zwei individuell geregelte Ströme bereitgestellt werden. Dabei ist aber gerade von Vorteil, dass die Frequenz am Ausgang des Frequenzumrichters einstellbar ist. Auf diese Weise wird eine optimale Abstimmung auf die nachfolgend angeschlossenen Transformatoren erzielt. Da der Frequenzumrichter die drei Ausgänge, U, V, W aufweist, wird ein erster Strom zwischen den Ausgängen U und V und ein zweiter Strom zwischen den Ausgängen W und V bereitgestellt. Bei dieser Schaltung fließt ein Summenstrom vorzugsweise über V ab.

Voraussetzung für den Einsatz von Frequenzumrichtern zur Stromversorgung von Metallfolienstrahlern ist die Entwicklung einer entsprechenden Software, die im Steuerkreis des Frequenzumrichters eingesetzt wird. Diese Software stellt sicher, dass einer der drei Ausgänge des Frequenzumrichters für den Ablauf des Summenstroms der anderen beiden Ausgänge genutzt werden kann. Zudem sorgt diese Software für eine passende Stromregelung im Frequenzumrichter, da die als ohmsche Verbraucher arbeitenden Metallfolienstrahler über den Strom geregelt werden müssen. Es ist bevorzugt, diese Stromregelung über einen PI-Regler zu realisieren. Natürlich sind auch andere Regler, wie z. B. ein PID-Regler möglich. Des Weiteren beinhaltet diese Software verschiedene Überwachungsfunktionen. In diesem Zusammenhang ist es bspw. bevorzugt, die elektrischen Ausgangsspannungen am Frequenzumrichter zu überwachen. Auf diese Weise kann sichergestellt werden, dass auch im Störungsfall die am Metallfolienstrahler anliegende elektrische Spannung, vorzugsweise eine berührungssichere Niedrigspannung von 25 V, nicht überschritten wird. Auf diese Weise wird eine gesundheitliche Gefährdung eines Werkers durch elektrische Überspannungen vermieden.

Vorzugsweise liegt die elektrische Ausgangsspannung des Frequenzumrichters in der Größenordnung der Eingangsspannung, bspw. bei 400 V in Deutschland. Drehstromnetze in anderen Ländern liefern andere Eingangsspannungen, sodass hier entsprechend auch andere Ausgangsspannungen bevorzugt sind. In den meisten Ländern Europas liefert das Drehstromnetz 400 V wie in Deutschland. Während in Mexiko und Brasilien die Eingangsspannung ebenfalls bei 400 V liegt, ist sie in Indien bei 440 V und in den USA bei 480 V. In Japan liegt die Eingangsspannung des Drehstromnetzes bei 200 V.

Der Ausgangsstrom des Frequenzumrichters wird dagegen durch die Leistung des Frequenzumrichters bestimmt. Hier zeigt sich der Vorteil bei der Verwendung eines Transformators am Ausgang des Frequenzumrichters. Im selben Maße, wie die elektrische Spannung von typisch 400 V auf kleinere elektrische Spannungen transformiert wird, steigt der zur Verfügung stehende elektrische Strom. Diese elektrische Stromstärke ist aber bei bevorzugten berührungssicheren Niedrigspannungen von bspw. 25 V nicht gefährlich für die Gesundheit einer die Metallfolie des Metallfolienstrahlers berührenden Person.

Prinzipiell ist anstelle der oben genannten Stromregelung im Frequenzumrichter auch eine Spannungsregelung möglich. Dazu müssten jedoch die verschiedenen elektrischen Widerstände im Betriebsstromkreis des Metallfolienstrahlers, wie bspw. Übergangswiderstände, Leitungswiderstände, temperaturabhängige Widerstände des Strahlers, bekannt sein oder zunächst ermittelt werden. Ohne diese Werte, die nur mit großem Aufwand bestimmbar sind, ist eine genaue Spannungsregelung nicht sicher zu stellen. Ein derartiger Aufwand entfällt aber bei der bevorzugten und oben beschriebenen Stromregelung durch den Frequenzumrichter.

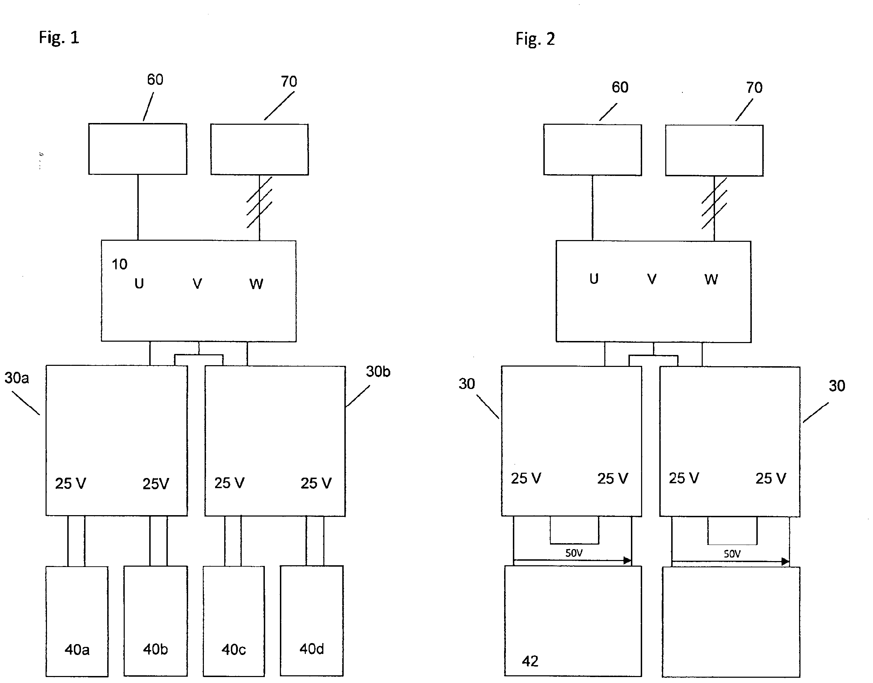

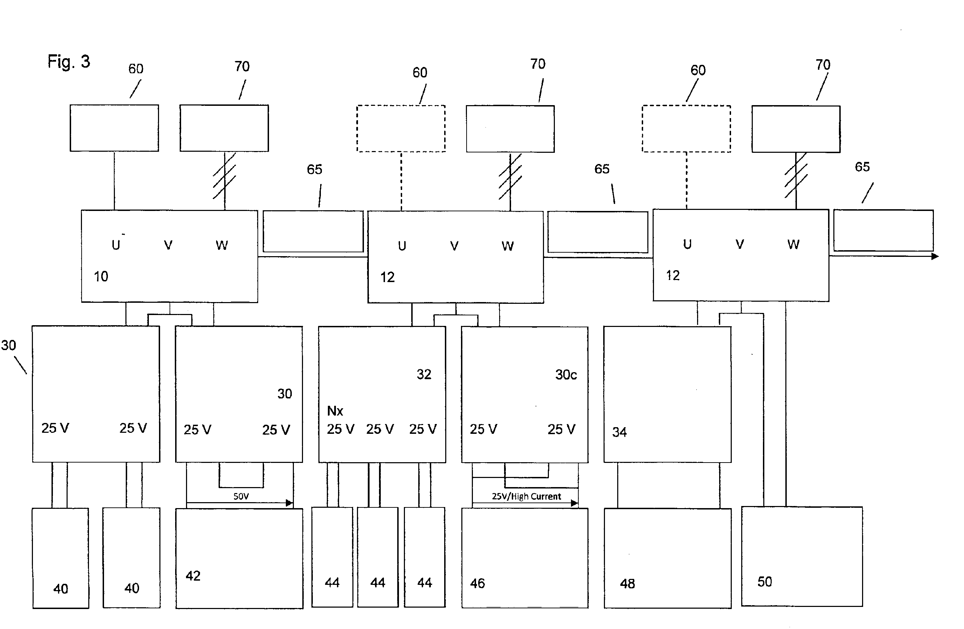

Die Figuren 1-2 zeigen unterschiedliche Beispiele, in denen Metallfolienstrahler 40; 42; 44; 46; 48; 50 unterschiedlicher Größe und/oder Bauart angesteuert werden. Diese Metallfolienstrahler 40; 42; 44; 46; 48; 50 werden elektrisch über den Frequenzumrichter 10 in Kombination mit einem Transformator 30; 32; 34 unterschiedlicher Konfiguration oder direkt ohne Transformator versorgt. Der Frequenzumrichter 10 wird wiederum über ein angeschlossenes bevorzugtes Drehstromnetz versorgt, im speziellen ein Drei-Phasen-Netzanschluss, das mit dem Bezugszeichen 70 benannt ist. Der Drei-Phasen-Netzanschluss 70 könnte in gleicher Weise auch ein erfindungsgemäß bevorzugter Ein-Phasen-Netzanschluss (nicht gezeigt) sein. Während hier der Frequenzumrichter 10 einzeln angesteuert werden kann, beispielsweise über eine separate Steuerleitung oder Steuerschaltung, ist es ebenfalls bevorzugt, den Frequenzumrichter 10 über ein BUS-System 60, bspw. ein CAN-Bus oder ein PROFI-Bus, mit Steuer- und Betriebsinformationen zu versorgen. Ergänzend zum BUS-System 60 oder in Kombination mit dem BUS-System 60 kommunizieren einzelne Frequenzumrichter 60 direkt miteinander. In diesem Zusammenhang ist es bevorzugt, einen Frequenzumrichter 10 als Master und die daran angeschlossenen Frequenzumrichter 10 als Slave zu betreiben (siehe Fig. 3). In diesem Fall folgen die als Slave definierten Frequenzumrichter 12 den Steuerungsbefehlen, die der Master-Frequenzumrichter 10 über das BUS-System 60 oder eine andere Verbindung erhalten hat.

In Fig. 1 werden vier Metallfolienstrahler 40a, 40b, 40c, 40d über den Frequenzumrichter 10 und die beiden Transformatoren 30a, 30b betrieben. Als duale Stromquelle stellt der Frequenzumrichter 10 zwischen den Ausgängen U und V sowie W und V zwei individuelle Stromstärken bereit. Es ist ebenfalls bevorzugt, die Ströme zwischen den Ausgängen U und W sowie V und W abzugreifen. Die an den Ausgängen U und V sowie W und V bereitgestellten Wechselspannungen von vorzugsweise ca. 400 V werden durch zwei baugleiche Transformatoren 30a, 30b in einen gewünschten elektrischen Spannungs-Betriebsbereich der angeschlossenen Metallfolienstrahler 40a-d transformiert. Die allgemeine Aufgabe der Transformatoren 30 ist somit das Heruntertransformieren der Ausgangsspannung des Frequenzumrichters 10 auf kleinere elektrische Spannungen bei gleichzeitigem Erhöhen des möglichen Ausgangsstroms. Denn durch die Verwendung kleiner elektrischer Spannungen werden automatisch Sicherheitsvorschriften eingehalten. Gleichzeitig stehen höhere elektrische Ströme zur Verfügung, für die sonst ein leistungsfähiger Frequenzumrichter 10 eingesetzt werden müsste. Sollten sich die gesetzlichen Grenzwerte für berührungssichere elektrische Niederspannungen ändern, dann kann vorzugsweise immer der Transformator 30 im Zusammenhang mit dem bzw. den angeschlossenen Metallfolienstrahler/n entsprechend angepasst werden.

In der praktischen Anwendung hat sich gezeigt, dass die Verwendung von Transformatoren 30 mit mindestens zwei gleichen Sekundärwicklungen, also für jeden Metallfolienstrahler 40 eine Sekundärwicklung, von Vorteil ist. Somit können über die Sekundärwicklungen die Transformatoren 30 flexibel an die zu versorgenden Metallfolienstrahler 40; 42; 44; 46; 48; 50 angepasst werden. Damit ist die Verwendung von standardisierten Komponenten, wie bspw. dem Frequenzumrichter 10, ebenfalls möglich. Allgemein sind die Transformatoren an den Bezugszeichen 30, 30a, 30b, 30c, und 32 veranschaulicht. Am Eingang des Transformators versorgt der Frequenzumrichter 10; 12 die Primärwicklung (nicht gezeigt) des Transformators 30, 30a, 30b, 30c, und 32. Die Größe der Sekundärwicklung sowie die Anzahl der Sekundärwicklungen ist durch die angegebenen Spannungswerte "25 V" am Ausgang des Transformators symbolisch angegeben.

Fig. 1 zeigt die Verwendung der Transformatoren 30a, 30b mit zwei gleichen Sekundärwicklungen. Damit sind insgesamt vier Metallfolienstrahler 40 ansteuerbar. Zur Vereinfachung der elektrischen Versorgung und Verschaltung der Metallfolienstrahler 40a-d ist es bevorzugt, dass die beiden durch den gleichen Transformator 30a, 30b versorgten Metallfolienstrahler 40a, 40b, 40c, 40d die gleiche Strom- und Spannungsaufnahme aufweisen. In diesem Zusammenhang ist der elektrische Widerstand des Metallfolienstrahlers 40a; 40b; 40c; 40d die bestimmende Größe. Dieser elektrische Widerstand der beiden Infrarotstrahler 40a; 40b und 40c, 40d sollte weitestgehend gleich sein. Dies ist im Allgemeinen gegeben, wenn die beiden Metallfolienstrahler 40a, 40b; 40c, 40d gleich konfiguriert, bspw. gleich breit und lang, sind.

Es ist ebenfalls bevorzugt, dass die Metallfolienstrahler 40c, 40d größer oder kleiner, also länger oder kürzer oder schmäler oder breiter, als die Metallfolienstrahler 40a, 40b des ersten Transformators 30a vorgesehen sind. Da bspw. im Fall größerer Metallfolienstrahler 40c, 40d deren ohmscher Widerstand auch größer ausfällt als an den Metallfolienstrahlern 40a, 40b, muss der durch den zweiten Transformator 30b bereitgestellte Strom ebenfalls größer sein. Diese unterschiedlichen Stromstärken werden entsprechend den angeschlossenen Metallfolienstrahlern 40a, 40b und 40c, 40d durch den Frequenzumrichter 10 an die beiden Transformatoren 30a, 30b geliefert. Auf diese Weise kann trotz einer bevorzugten berührungssicheren Niederspannung von 25 V jeder Metallfolienstrahler 40a, b, c, d mit der passenden elektrischen Leistung versorgt werden. Denn die elektrische Leistung ergibt sich aus dem Produkt von der am Metallfolienstrahler anliegenden elektrischen Spannung und dem fließenden elektrischen Strom. Bei konstanter Niedrigspannung würde daher der elektrische Strom durch den Frequenzumrichter 10 erhöht werden, um einen Metallfolienstrahler mit höherer Leistung zu versorgen.

Es ist natürlich ebenfalls bevorzugt, die Metallfolienstrahler 40a-40d mit einer höheren elektrischen Spannung als der berührungssicheren Spannung zu versorgen.

Bezugnehmend auf Fig. 2 ist eine ebenfalls bevorzugte verwendete Ansteuerung von Metallfolienstrahlern 42 dargestellt. Der Frequenzumrichter 10 steuert über die beiden Transformatoren 30 nur zwei voneinander unabhängig betriebene Metallfolienstrahler 42 an. Die Transformatoren 30 weisen genauso wie die Transformatoren 30a und 30b aus Fig. 1 eine Primärwicklung in Kombination mit jeweils zwei Sekundärwicklungen zur Erzeugung von Niedrigspannungen auf. Wie man anhand der Verbindung zwischen Transformator 30 und Metallfolienstrahler 42 erkennen kann, sind die Ausgänge der beiden Sekundärwicklungen der Transformatoren 30 in Reihe geschaltet, um dem angeschlossenen Metallfolienstrahler 42 eine höhere elektrische Spannung zur Verfügung zu stellen. Eine derartige elektrische Schaltung wird vorzugsweise bei längeren Metallfolienstrahlern 42 eingesetzt. Diese längeren Metallfolienstrahler 42 benötigen im Vergleich zu kürzeren Metallfolienstrahlern eine höhere Versorgungsspannung.

Natürlich ist diese elektrische Schaltung auch mithilfe eines Transformators (nicht gezeigt) realisierbar, der nur eine Sekundärwicklung aufweist. Diese nur eine Sekundärwicklung wäre dann in ihrer Wicklungszahl angepasst an die erforderliche höhere elektrische Versorgungsspannung für den angeschlossenen Metallfolienstrahler 42. Es ist ebenfalls bevorzugt, mithilfe der Transformatoren 30 aus Fig. 2 einen Metallfolienstrahler 46 zu versorgen, der eine höhere elektrische Leistung und somit eine höhere elektrische Stromaufnahme aufweist. Um bei Einhaltung der berührungssicheren elektrischen Niedrigspannung, von bspw. 25 V, diese höhere Leistung des Metallfolienstrahlers 46 (siehe Fig. 3) über den Trafo 30 sicherzustellen, muss der Metallfolienstrahler 46 mit einem höheren elektrischen Strom im Vergleich zu dem Metallfolienstrahler 42 aus Fig. 2 versorgt werden. Zu diesem Zweck werden die beiden Sekundärwicklungen des Transformators 30c, die mit den Sekundärwicklungen des Transformators 30 aus Fig. 2 identisch sind, parallel zueinander geschaltet. Diese Verschaltung der Ausgänge der Sekundärwicklungen des Transformators 30c führt zu einer Addition der Stromstärken, die an den Ausgängen der Sekundärwicklungen des Transformators 30c bereitgestellt werden. Gleichzeitig bleibt aber die elektrische Spannung konstant. Daraus folgt, dass mit der Verschaltung zwischen dem Transformator 30c und dem Metallfolienstrahler 46 gemäß Fig. 3 ein leistungsstärkerer Metallfolienstrahler 46 bei gleichzeitiger Beibehaltung der berührungssicheren elektrischen Niedrigspannung versorgbar ist.

Fig. 3 zeigt eine bevorzugte Ausführungsform der Ansteuerung von mehreren Metallfolienstrahlern. In dieser Anordnung sind unterschiedliche Ansteuerungskonzepte miteinander kombiniert. Zudem ist beispielgebend dargestellt, dass verschiedene Frequenzumrichter 10, 12 über das bereits oben genannte BUS-System 60 miteinander kombiniert werden können. Gemäß einer Alternative ist jeder Frequenzumrichter 10, 12 an das BUS-System 60 angeschlossen und erhält darüber seine individuellen Steuerungsinformationen und -befehle.

Gemäß einer weiteren Alternative fungiert ein Frequenzumrichter 10 als Master-Frequenzumrichter. Dieser Master-Frequenzumrichter 10 ist an das BUS-System 60 angeschlossen. Die weiteren Frequenzumrichter 12 in Fig. 3 sind als Slave-Frequenzumrichter konfiguriert. Diese Slave-Frequenzumrichter 12 folgen den Steuerinformationen an den Master-Frequenzumrichter 10. In diesem Fall sind die Slave-Frequenzumrichter 12 nicht mit dem BUS-System 60 verbunden. Stattdessen erhalten Sie direkt ihre Steuerinformationen von dem Master-Frequenzumrichter 10, wie durch die Verbindungsleitungen 65 angedeutet ist.

In der Anordnung der Fig. 3 sind verschiedene Ansteuerungskonzepte für unterschiedliche Metallfolienstrahler 40, 42, 44, 46, 48, 50 miteinander kombiniert. Damit wird unterstrichen, dass beliebige Bauteilkonfigurationen bzw. Bauteiloberflächen von Kunststoffbauteilen mit Wärme bestrahlbar sind, indem die verschiedensten Metallfolienstrahler 40, 42, 44, 46, 48, 50 derart miteinander kombiniert werden, dass die Bauteiloberfläche des Kunststoffbauteils optimal durch die Metallfolienstrahler abgedeckt ist. So ist bspw. der Frequenzumrichter 10 aus Fig. 3 mit zwei Transformatoren 30 verbunden, deren Versorgung von Metallfolienstrahlern 40, 42 bereits im Zusammenhang mit den Fig. 1 und 2 erläutert worden ist. So betreibt der erste Transformator 30 vorzugsweise zwei elektrisch gleiche Metallfolienstrahler 40, während der zweite Transformator 30 nur einen Metallfolienstrahler 42 betreibt. Dieser Metallfolienstrahler 42 wird aber mit der doppelten elektrischen Spannung versorgt, indem die beiden Ausgänge der Sekundärwicklungen des zweiten Transformators 30 in Reihe geschaltet sind.

Der in Fig. 3 mittig angeordnete Frequenzumrichter 12 ist mit einem Transformator 32 verbunden, der vorzugsweise den elektrisch gleich konfigurierten Metallfolienstrahler 44 versorgt. Zu diesem Zweck enthält der Transformator 32 jeweils eine Sekundärwicklung für jeden angeschlossenen Metallfolienstrahler 44. Daher ist es ebenfalls bevorzugt, prinzipiell beliebig viele (N) Sekundärwicklungen im Transformator 32 mit der Primärwicklung zu kombinieren. Dabei sollte man jedoch beachten, dass sich der durch den Frequenzumrichter am Transformator 32 bereitgestellte Strom zur Versorgung der Metallfolienstrahler 44 auf die einzelnen Sekundärwicklungen verteilt. Dies führt dazu, dass sich die durch den Frequenzumrichter 12 bereitgestellte Leistung am Ausgang U-V auf die N-Sekundärwicklungen aufteilt. Diese aufgeteilte elektrische Leistung muss noch ausreichend groß sein, um einen angeschlossenen Metallfolienstrahler 44 zufriedenstellend betreiben zu können.

Am Transformator 30c sind die beiden vorhandenen Sekundärwicklungen parallel geschaltet. Auf diese Weise addieren sich die durch die Sekundärwicklungen bereitgestellten elektrischen Stromstärken, sodass der angeschlossene Metallfolienstrahler 46 zwar mit der bevorzugten Niedrigspannung aber gleichzeitig mit einer erhöhten elektrischen Stromstärke versorgt werden kann.

Eine weitere bevorzugte Ansteuerungsmöglichkeit von Metallfolienstrahlern 48, 50 zeigt der am rechten Bildrand von Fig. 3 dargestellte Frequenzumrichter 12. Der hier dargestellte Transformator 34 besitzt im Vergleich zu den übrigen Transformatoren 30a, 30b, 30, 32, 30c nur eine Sekundärwicklung, die auf den angeschlossenen Metallfolienstrahler 48 abgestimmt ist. Durch die Nutzung von nur einer Sekundärspule geht zwar die Anschlussmöglichkeit für mehrere Metallfolienstrahler am Transformator 34 verloren, die elektrische Versorgung des Metallfolienstrahlers 48 kann aber optimal realisiert werden. Denn sowohl der durch den Frequenzumrichter 12 bereitgestellte elektrische Strom wie auch die durch den Transformator 34 realisierte elektrische Spannung entsprechen genau dem angeschlossenen Metallfolienstrahler 48, um dessen optimale elektrische Leistung zu realisieren.

Am zweiten Stromausgang zwischen den Ausgängen W und V des Frequenzumrichters 12 ist direkt ein Metallfolienstrahler 50 ohne Zwischenschaltung eines Transformators angeschlossen. Mithilfe dieser elektrischen Schaltung steht die durch den Frequenzumrichter gelieferte volle Ausgangsspannung dem Metallfolienstrahler 50 zur Verfügung. Gleichzeitig ist aber der vom Frequenzumrichter gelieferte elektrische Strom geringer, als wenn ein Transformator zwischen Frequenzumrichter 12 und Metallfolienstrahler 50. geschaltet worden wäre. Gerade bei langen Metallfolienstrahlern, also Metallfolienstrahler mit einem hohen ohmschen Widerstand, ist eine derartige Ansteuerung wie bei dem Metallfolienstrahler 50 von Nutzen. Zudem ist es bevorzugt, eine derartige Ansteuerung dann einzusetzen, wenn diese Metallfolienstrahler nicht durch einen Werker zugänglich sind. In diesem Fall ist es nämlich nicht erforderlich, den Metallfolienstrahler 50 mit einer berührungssicheren elektrischen Niederspannung zu betreiben.

Jedes der hier gezeigten oder angedeuteten Ansteuerungskonzepte für Metallfolienstrahler in Kombination mit einem Frequenzumrichter und einem Transformator oder ohne Transformator ist beliebig mit einem anderen Ansteuerungskonzept kombinierbar. So besteht bspw. eine nicht gezeigte Ansteuerungskonfiguration darin, einen Transformator mit fünf Sekundärwicklungen zum Betrieb von fünf elektrisch gleichen Metallfolienstrahlern zu verwenden. Parallel dazu kann noch ein Metallfolienstrahler direkt an den Frequenzumrichter ohne einen zwischengeschalteten Transformator angeschlossen sein. Es ist ebenfalls bevorzugt, mithilfe der zwischengeschalteten Transformatoren die elektrische Betriebsspannung nach oben zu transformieren. Diese würde dann entsprechende Wärmestrahler erfordern, die mit nicht berührungssicheren Niedrigspannungen betrieben werden können.

Allein in der Standardkonfiguration von einem Frequenzumrichter 10 mit zwei Transformatoren 30 mit jeweils zwei Sekundärwicklungen ergeben sich bereits sechs verschiedene Verschaltungs- bzw. Anschlussmöglichkeiten von Wärmestrahlern bzw. Metallfolienstrahlern.
- vier Metallfolienstrahler, davon jeweils zwei mit gleichem Versorgungsstrom und gleicher Versorgungsspannung,
- drei Metallfolienstrahler, davon zwei mit gleichem Versorgungsstrom und gleicher Versorgungsspannung und ein Metallfolienstrahler mit maximal doppelter Versorgungsspannung
- drei Metallfolienstrahler, davon zwei mit gleichem Versorgungsstrom und gleicher Versorgungsspannung und eine Metallfolienstrahler mit maximal doppeltem Versorgungsstrom,
- zwei Metallfolienstrahler, davon ein Metallfolienstrahler mit doppelter elektrischer Versorgungsspannung und ein Metallfolienstrahler mit doppeltem elektrischem Versorgungsstrom
- zwei Metallfolienstrahler mit doppeltem elektrischen Versorgungsstrom und
- zwei Metallfolienstrahler mit doppelter elektrischer Versorgungsspannung.

An einen Transformator mit N-Sekundärwicklungen (bspw. der Transformator 32 in Fig. 3) können bis zu N Metallfolienstrahler angeschlossen werden. Diese N Metallfolienstrahler werden mit dem gleichen Strom betrieben. Im einfachsten Fall mit N=1 befindet sich nur ein Metallfolienstrahler im Sekundärkreis des Transformators 30. Prinzipiell lässt sich die Anzahl der Metallfolienstrahler N auch beliebig erhöhen, sodass dann drei, vier oder mehr Metallfolienstrahler über den Frequenzumrichter in Kombination mit dem Transformator versorgt werden.

Nachteilig bei der Verwendung von Transformatoren sind deren Magnetisierungsverluste. Indem die elektrische Spannung am Eingang des Transformators als Sinussignal mit hoher Frequenz vorgesehen ist, wird dieses Problem minimiert. Denn mit steigender Frequenz dieses Sinussignals der elektrischen Eingangsspannung sinkt der Magnetisierungsverlust. Auf diese Weise kann dann auch eine kleinere Bauform des Transformators genutzt werden. In diesem Zusammenhang ist es erfindungsgemäß bevorzugt, eine Frequenz von 300 Hz zu nutzen, wobei dies einen Kompromiss zwischen Regelgeschwindigkeit des Frequenzumrichters und einer möglichst hohen Frequenz zur Reduzierung der Magnetisierungsverluste beinhaltet. In diesem Zusammenhang ist es aber ebenfalls bevorzugt, auch andere Frequenzen einzusetzen.

Bei der Verwendung hoher elektrischer Ströme und kleiner elektrischer Spannungen am Metallfolienstrahler ist die Nutzung von Kleinspannungstransformatoren von Vorteil. Vorzugsweise transformieren die Kleinspannungstransformatoren die Ausgangsspannung des Frequenzumrichters 10 in einen Wechselspannungsbereich von 0 V bis 50 V und gemäß einer weiter bevorzugten Ausführungsform in einen Bereich von 0 V bis 25 V. Zwar werden die Transformatoren zusätzlich benötigt, aufgrund ihrer Verwendung kann aber zur Stromversorgung ein deutlich kleinerer und kostengünstigerer Frequenzumrichter gewählt werden.

Die oben beschriebenen Schaltungskonzepte werden zum Erwärmen und/oder Infrarotschweißen von Kunststoffbauteilen verwendet. Zu diesem Zweck wird die Mehrzahl der Metallfolienstrahler gemäß obiger Konzepte angesteuert, sodass diese ihre Wärmestrahlung an die benachbart angeordneten Kunststoffbauteile abgeben. Um die Kunststoffbauteile optimal mit Wärme bestrahlen zu können, ist es bevorzugt, diese Kunststoffbauteile in einer geeigneten Anordnung zu halten und/oder mit dieser Anordnung in Richtung Wärmestrahler und von diesem weg zu bewegen. Eine derartige Anordnung bringt somit das Kunststoffbauteil in die unmittelbare Nähe der Metallfolienstrahler, sodass die Wärme im Oberflächenbereich des Kunststoffbauteils auftrifft. Nachdem das Kunststoffbauteil ausreichend erwärmt worden ist, bewegt die Anordnung das Kunststoffbauteil zur weiteren Verarbeitung zu bspw. einem zweiten Kunststoffbauteil, um es mit diesem zu Verschweißen. Zu diesem Zweck werden die beiden Kunststoffbauteile in ihren erwärmten Fügezonen gegeneinander gedrückt, sodass nach Erkalten der Fügezonen ein Verbund zwischen diesen beiden Kunststoffbauteilen vorliegt. Dieses Vorgehen ist allgemein als Infrarotschweißen bekannt.

## Patentansprüche

1. Vorrichtung zum Infrarotschweißen von mindestens zwei Kunststoffbauteilen, die die folgenden Merkmale aufweist:
a. mindestens eine Strahlquelle, mit der zugeführte elektrische Energie in Wärmestrahlung umwandelbar ist, insbesondere einen Metallfolienstrahler (40; 42; 44; 46; 48; 50), und mit der Kunststoffbauteile erwärmbar sind, sowie
b. eine Anordnung zum Halten und Bewegen der Kunststoffbauteile, sodass diese nach dem Erwärmen durch die mindestens eine Strahlquelle in Anlage bringbar und miteinander verschweißbar oder zu einer weiteren Verarbeitungsstelle bewegbar sind, und die Vorrichtung ist **dadurch gekennzeichnet, dass** sie weiterhin umfasst:
c. eine Steuerung umfassend mindestens einen Frequenzumrichter (10; 12), mit einem ersten (U), einem zweiten (W) und einem dritten Ausgang (V), sodass zwischen dem ersten (U) und dritten Ausgang (V) ein erster Wechselstrom sowie zwischen dem zweiten (W) und dritten Ausgang (V) ein zweiter Wechselstrom zur Versorgung der mindestens einen Strahlquelle generierbar ist, wobei
d. zwischen dem ersten (U) und dem dritten Ausgang (V) des Frequenzumrichters (10; 12) ein erster Transformator (30; 32; 34) oder zwischen dem zweiten (W) und dem dritten Ausgang (V) des Frequenzumrichters (10; 12) ein zweiter Transformator (30; 32; 34) angeschlossen ist, mit dem eine durch den Frequenzumrichter (10; 12) bereitgestellte Wechselspannung in einen elektrischen Betriebsbereich der mindestens einen Strahlquelle transformierbar ist.

2. Vorrichtung gemäß Anspruch 1, in der der erste (30; 32; 34) und/oder zweite Transformator (30; 32; 34) eine Primärwicklung und eine oder eine Mehrzahl von Sekundärwicklungen aufweist, um eine oder eine Mehrzahl von Strahlquellen zu versorgen.

3. Vorrichtung gemäß Anspruch 2, in der mindestens eine der Sekundärwicklungen im Hinblick auf die Primärwicklung derart konfiguriert ist, dass eine berührungssichere elektrische Betriebsspannung für die mindestens eine Strahlquelle generierbar ist.

4. Vorrichtung gemäß Anspruch 1, die eine Mehrzahl von Frequenzumrichtern (10; 12) aufweist, die über ein BUS-System (60) miteinander verbunden und ansteuerbar sind.

5. Verfahren zum Verschweißen von mindestens zwei Kunststoffbauteilen mittels einer Vorrichtung gemäß einem der Patentansprüche 1 bis 4, das die folgenden Schritte aufweist:
a. Bereitstellen (S1) mindestens einer Strahlquelle, vorzugweise mindestens eines Infrarotwärmestrahlers oder Metallfolienstrahlers (40; 42; 44; 46; 48; 50),
b. elektrisches Versorgen (S2) der mindestens einen Strahlquelle mit mindestens einem Frequenzumrichter (10; 12), der einen ersten und einen zweiten Wechselstrom erzeugt, sowie
c. Erwärmen (S4) des mindestens einen Kunststoffbauteils durch einen definierten Wechselstrom in der mindestens einen Strahlquelle, und das Verfahren ist **gekennzeichnet durch** den weiteren Schritt:
d. Zwischenschalten (S3) eines Transformators (30; 32; 34) zwischen den Frequenzumrichter (10; 12) und die mindestens eine Strahlquelle, wobei der Transformator (30; 32; 34) zwischen einem ersten (U) und einem dritten Ausgang (V) des Frequenzumrichters (10; 12) oder zwischen einem zweiten (W) und einem dritten Ausgang (V) des Frequenzumrichters (10; 12) angeordnet ist, und
e. Bewegen (S6) von mindestens zwei erwärmten Kunststoffbauteilen in Anlage zueinander, sodass die Kunststoffbauteile miteinander verschweißt werden.

6. Verfahren gemäß Anspruch 5, mit dem weiteren Schritt:
Erzeugen einer berührungssicheren Wechselspannung für die elektrische Versorgung der mindestens einen Strahlquelle.

7. Verfahren gemäß Anspruch 5 oder 6 mit dem weiteren Schritt:
Ansteuern (S5) einer Mehrzahl von Strahlquellen über eine Mehrzahl von Frequenzumrichtern (10; 12), die über ein BUS-System (60) miteinander verbunden sind.

## Claims

1. Device for infrared welding of at least two plastic components comprising the following features:
a. at least one radiation source with which supplied electrical energy is convertible into heat radiation, in particular a metal foil radiator (40; 42; 44; 46; 48; 50), and with which plastic parts are heatable, as well as
b. an assembly for holding and moving the plastic components so that after their heating by means of the at least one radiator source, they are movable into abutment and weldable to each other or movable to a further processing site, and the assembly is **characterized in that** it further comprises:
c. a control comprising at least one frequency converter (10; 12) having a first (U), a second (W) and a third output (V) so that between the first (U) and the third output (V), a first alternating current is producible as well as between the second (W) and the third output (V), a second alternating current is producible for supplying the at least one radiation source, wherein
d. between the first (U) and the third output (V) of the frequency converter (10; 12), a first transformer (30; 32; 34) or between the second (W) and the third output (V) of the frequency converter (10; 12), a second transformer (30; 32; 34) is connected by means of which an alternating voltage provided by the frequency converter (10; 12) is transformable into an electrical operating range of the at least one radiation source.

2. The device according to claim 1, in which the first (30; 32; 34) and/or the second transformer (30; 32; 34) comprise(s) a primary winding and one or a plurality of secondary windings for supplying one or a plurality of radiation sources.

3. The device according to claim 2, in which at least one of the secondary windings is configured in view of the primary winding so that a contact-proof electrical operating voltage for the at least one radiation source is producible.

4. The device according to claim 1, comprising a plurality of frequency converters (10; 12) which are connected to each other and controllable via a BUS-system (60).

5. A method for welding at least two plastic components by means of a device according to one of the claims 1 to 4, comprising the following steps:
a. providing (S 1) at least one radiation source, preferably at least one infrared heat radiator or metal foil radiator (40; 42; 44; 46; 48; 50),
b. electrically supplying (S2) the at least one radiation source by means of at least one frequency converter (10; 12) producing a first and a second alternating current, as well as
c. heating (S4) the at least one plastic component by means of a defined alternating current in the at least one radiation source, and the method is **characterized by** the further step:
d. interconnecting (S3) a transformer (30; 32; 34) between the frequency converter (10; 12) and the at least one radiation source, wherein the transformer (30; 32; 34) is arranged between a first (U) and a third output (V) of the frequency converter (10; 12) or between a second (W) and a third output (V) of the frequency converter (10; 12), and
e. moving (S6) at least two heated plastic components into abutment with each other so that the plastic components are welded to each other.

6. The method according to claim 5 with the further step:
producing a contact-proof alternating voltage for the electrical supply of the at least one radiation source.

7. The method according to claim 5 or 6 with the further step:
driving (S5) a plurality of radiation sources via a plurality of frequency converters (10; 12) which are connected to each other via a BUS-system (60).

## Revendications

1. Dispositif pour le soudage infrarouge d'au moins deux composants en plastique, présentant les caractéristiques suivantes :
a. au moins une source de rayonnement, avec laquelle de l'énergie électrique alimentée peut être transformée en rayonnement de chaleur, en particulier un émetteur à feuillards métalliques (40 ; 42 ; 44 ; 46 ; 48 ; 50), et avec laquelle des composants en plastique peuvent être chauffés, et
b. un ensemble de maintien et de déplacement des composants en plastique, de sorte que ceux-ci peuvent être mis en contact par l'au moins une source de rayonnement après le chauffage et soudés les uns aux autres ou déplacés vers une autre station de traitement, et le dispositif est **caractérisé en ce qu'**il comporte en outre :
c. une commande comportant au moins un convertisseur de fréquence (10 ; 12), avec une première (U), une deuxième (W) et une troisième sortie (V), de sorte qu'un premier courant alternatif peut être généré entre la première (U) et la troisième sortie (V), et un deuxième courant alternatif peut être généré entre la deuxième (W) et la troisième sortie (V) pour l'alimentation de l'au moins une source de rayonnement, dans lequel
d. un premier transformateur (30 ; 32 ; 34) est connecté entre la première (U) et la troisième sortie (V) du convertisseur de fréquence (10 ; 12) ou un deuxième transformateur (30 ; 32 ; 34) est connecté entre la deuxième (W) et la troisième sortie (V) du convertisseur de fréquence (10 ; 12), avec lequel une tension alternative fournie par le convertisseur de fréquence (10 ; 12) peut être transformée en une plage de fonctionnement électrique de l'au moins une source de rayonnement.

2. Dispositif selon la revendication 1, dans lequel le premier (30 ; 32 ; 34) et/ou le deuxième transformateur (30 ; 32 ; 34) présente un enroulement primaire et un ou plusieurs enroulements secondaires, afin d'alimenter une ou plusieurs sources de rayonnement.

3. Dispositif selon la revendication 2, dans lequel l'un au moins des enroulements secondaires est configuré de telle façon quant à l'enroulement primaire, qu'une tension de fonctionnement électrique sûre au toucher peut être générée pour l'au moins une source de rayonnement.

4. Dispositif selon la revendication 1, présentant plusieurs convertisseurs de fréquence (10 ; 12) reliés entre eux et aptes à être commandés par le biais d'un système de bus (60).

5. Procédé de soudage d'au moins deux composants en plastique au moyen d'un dispositif selon l'une des revendications 1 à 4, présentant les étapes suivantes :
a. mise à disposition (S1) d'au moins une source de rayonnement, de préférence d'au moins un émetteur de chaleur infrarouge ou émetteur à feuillards métalliques (40 ; 42 ; 44 ; 46 ; 48 ; 50),
b. alimentation électrique (S2) de l'au moins une source de rayonnement avec au moins un convertisseur de fréquence (10 ; 12) produisant un premier et un deuxième courant alternatif, et
c. chauffage (S4) de l'au moins un composant en plastique par un courant alternatif défini dans l'au moins une source de rayonnement, et le procédé étant **caractérisé par** l'étape supplémentaire suivante :
d. interconnexion (S3) d'un transformateur (30 ; 32 ; 34) entre le convertisseur de fréquence (10 ; 12) et l'au moins une source de rayonnement, le transformateur (30 ; 32 ; 34) étant disposé entre une première (U) et une troisième sortie (V) du convertisseur de fréquence (10 ; 12) ou entre une deuxième (W) et une troisième sortie (V) du convertisseur de fréquence (10 ; 12), et
e. mise en contact (S6) d'au moins deux composants en plastique l'un contre l'autre, de manière à souder les composants en plastique entre eux.

6. Procédé selon la revendication 5, présentant l'étape supplémentaire suivante :
production d'une tension alternative sûre au toucher pour l'alimentation électrique de l'au moins une source de rayonnement.

7. Procédé selon la revendication 5 ou 6, présentant l'étape supplémentaire suivante :
commande (S5) de plusieurs sources de rayonnement par le biais de plusieurs convertisseurs de fréquence (10 ; 12), lesquels sont connectés entre eux par le biais d'un système de bus (60).
